(19) **Europäisches Patentamt**

**European Patent Office**

**Office européen des brevets**

(11) Veröffentlichungsnummer: **0 285 762 B1**

(12) **EUROPÄISCHE PATENTSCHRIFT**

(45) Veröffentlichungstag der Patentschrift: **02.12.92**

(51) Int. Cl.⁵: **A23B 4/14**, A23B 4/044, A23L 3/34

(21) Anmeldenummer: **88101720.6**

(22) Anmeldetag: **06.02.88**

(54) **Eine Anlage und ein Verfahren zur Trocknung bzw. Reifung von Nahrungsmitteln.**

(30) Priorität: **09.02.87 AT 256/87**

(43) Veröffentlichungstag der Anmeldung:
**12.10.88 Patentblatt 88/41**

(45) Bekanntmachung des Hinweises auf die
Patenterteilung:
**02.12.92 Patentblatt 92/49**

(84) Benannte Vertragsstaaten:
**AT BE CH DE ES FR GB GR IT LI LU NL SE**

(56) Entgegenhaltungen:
DE-A- 2 618 226        DE-A- 2 725 358
DE-A- 3 441 683        FR-A- 885 138
FR-A- 1 102 510        FR-A- 1 127 274
FR-A- 2 495 749        NL-B- 123 625
US-A- 1 068 272        US-A- 2 312 339
US-A- 2 339 507        US-A- 3 199 436

(73) Patentinhaber: **Handl, Karl**
**Hauptstrasse 33**
**A-6551 Pians(AT)**

(84) Benannte Vertragsstaaten:
**BE ES FR GB GR LU NL SE**

(73) Patentinhaber: **Höllrigl, Ortwin**
**Dr. Stumpfstrasse 42**
**A-6020 Innsbruck(AT)**

(84) Benannte Vertragsstaaten:
**CH DE IT LI AT**

(72) Erfinder: **Handl, Karl**
**Hauptstrasse 33**
**A-6551 Pians(AT)**
Erfinder: **Höllrigl, Ortwin**
**Dr. Stumpfstrasse 42**
**A-6020 Innsbruck(AT)**

(74) Vertreter: **Torggler, Paul, Dr. et al**
**Wilhelm-Greil-Strasse 16**
**A-6020 Innsbruck(AT)**

## Beschreibung

Die Erfindung betrifft eine Anlage und ein Verfahren zur Trocknung bzw. Reifung von Nahrungsmitteln, insbesondere Fleischereierzeugnissen, mittels ungesättigter Luft, mit einem Behandlungsraum, der einen Zuluftkanal und einen Abluftkanal aufweist, wobei der Zuluftkanal an eine Außenluftzuführung anschließt, einen Kühler, einen Erhitzer und einen Ventilator aufweist, und über einen Lufteinlaßkanal mit dem Behandlungsraum verbunden ist.

Zur Reifung und Trocknung von Nahrungsmitteln, insbesondere Fleischereierzeugnissen, wie Speck usw. werden derartige Anlagen verwendet, in denen insbesondere mittels konditionierter Luft ein allmählicher Feuchtigkeitsentzug stattfindet. Die Reife- bzw. Trocknungsbedingungen leiten sich dabei von Erfahrungswerten ab, die produktbezogen und regional unterschiedlich sind.

Um die Behandlungsluft zur fortlaufenden Feuchtigkeitsaufnahme geeignet zu machen, muß diese entfeuchtet werden; das bedeutet, daß trokkene Luft zugeführt und feuchte Luft abgeführt werden muß. Die Trocknungsgeschwindigkeit sollte sich dabei nach jenem Wasserabgabevermögen des Behandlungsgutes richten, das keine Qualitätsveränderungen bewirkt. Eine zu rasche Trocknung bewirkt eine Erhärtung der Randzonen, deren Wasserleitfähigkeit in der Folge absinkt, sodaß die Trocknung im Innern beeinträchtigt wird. Eine zu langsame Trocknung hingegen erhöht die Gefahr von Fäulnis und Schimmelbildung. Temperatur und Feuchtigkeit der Zuluft müssen daher dem Trocknungs- und Reifegrad entsprechend eingestellt werden, wobei dies aus wirtschaftlichen Gründen zeit- und energiesparend erfolgen sollte. Versuche in dieser Richtung sind aus den DE-OSen 34 12 107 und 35 14 693 bekannt geworden. Dabei werden nach den DE-OSen 34 12 107 und 35 14 693 während der Behandlung die Feuchte und die Temperatur im Behandlungsraum gemessen und mit Sollwerten verglichen, und es wird zur Anpassung der Zuluft an die Sollwerte Außenluft zur Abluft zugemischt, solange die Außenluft zur Erreichung der Sollwerte geeignet ist. Kühlung, Heizung und Befeuchtung werden erst dann in Betrieb gesetzt, wenn die Eignung der Außenluft nicht mehr gegeben ist. Der Behandlungsraum, in dem eine Temperatur- und ein Feuchtefühler angeordnet sind, weist zur Durchführung dieses Verfahrens einen Zuluftkanal und zwei Abluftkanäle auf, von denen der erste in den Zuluftkanal mündet, der einen sperrbaren Außenluftanschluß aufweist, und der zweite ins Freie führt. Im Zuluftkanal sind nach der Mündung des Abluftkanals der Kühler, ein Tropfenabscheider, eine Befeuchtungseinrichtung, der Erhitzer und der Ventilator vorgesehen. Da das Druckgefälle zwischen der Druckseite und der Saugseite des Ventilators größer ist als zwischen der Druckseite und der Außenluft sowie der Außenluft und der Saugseite, ist die Umwälzung der Luft über den ersten Abluftkanal und den Zuluftkanal vorrangig, d.h. die Außenluft kann generell nur in einem vom Druckgefälle abhängigen Ausmaß zugemischt werden, sodaß das maximale Potential der Außenluft nicht genützt werden kann. Des weiteren ist die Feuchtemessung im Behandlungsraum störungsanfällig. Auch exakteste Feuchtemeßgeräte weisen Meßfehler bis zu 10 % auf, sodaß die an sich geringen und gering zu haltenden Feuchtigkeitsdifferenzen zwischen Zuluft und Abluft und Beginn und Ende der Behandlung des Gutes nicht genau meßbar sind.

Die Erfindung hat es sich daher zur Aufgabe gestellt, eine Anlage der eingangs genannten Art zu schaffen, deren Außenzuluftzumischung verfeinert und optimiert werden kann, sodaß die Trocknungsbedingungen verbessert und der Energieverbrauch nochmals gesenkt werden kann.

Diese Aufgabe wird nun erfindungsgemäß dadurch gelöst, daß vom Abluftkanal ein Verbindungskanal zum Zuluftkanal führt, daß im Abluftkanal vor der Abzweigung des Verbindungskanals ein zweiter Ventilator angeordnet ist, und daß die Abluftabführung, die Außenluftzuführung und der Verbindungskanal einzeln verstellbare Absperrklappen enthalten.

In den einzigen Abluftkanal ist somit ein weiterer Ventilator eingesetzt, die im Zusammenwirken mit den drei einzeln und unabhängig verstellbaren Sperrklappen eine wesentlich feinere Steuerung der Luftmischung und der Druckverhältnisse erlauben. So kann bei geeigneten Außenluftbedingungen, die, wie Messungen ergeben haben, im mitteleuropäischen Raum überraschend häufig vorliegen, ausschließlich bzw. nahezu ausschließlich Außenluft eingesetzt werden, wobei die Abluft zumindest großteils ins Freie ausgeblasen wird. In einer bevorzugten Ausführung ist zwischen dem zweiten Ventilator und der Abzweigung des Verbindungskanals ein zweiter Kühler vorgesehen. Mit Hilfe dieses zweiten Kühlers kann der Abluft, soferne dies für die Energiebilanz vorteilhaft ist, Wärme entzogen werden, die bevorzugt dem Zulufterhitzer zugeführt wird. In einer weiteren bevorzugten Ausführung ist schließlich vorgesehen, daß nach dem zweiten Kühler und an der Außenluftzuführung je ein Temperatur- und Feuchtemeßfühler angeordnet ist.

Wie bereits eingangs erwähnt, leiten sich die Reife- und Trocknungsbedingungen aus Erfahrungswerten ab. Dabei ist vor allem die relative Feuchte der Zuluft ein maßgebliches Kriterium, während die Temperatur der Zuluft eher eine untergeordnete Bedeutung aufweist. Während industrielle Behandlungsräume gemäß dem erwähnten Stand der Technik anfänglich eine Zulufttemperatur von ca. 25°C aufweisen, die dann auf etwa 15°C abgesenkt wird, wird die althergebrachte Reifung und Trocknung in bäuerlichen Betrieben im wesentlichen bei geringeren Temperaturen, hauptsächlich in der kälteren Jahreszeit durchgeführt, wobei Temperaturschwankungen allein keinen maßgeblichen Einfluß auf die Qualität der Produkte zu haben scheinen.

Es kann daher die Steuerung einer erfindungsgemäßen Anlage mit den oben erwähnten Temperatur- und Feuchtemeßfühlern für die Außenluft und die gekühlte Abluft eine weitere Energieeinsparung erzielt werden, wenn die Vergleichswerte nicht nur das Mischungsverhältnis zwischen Außen- und Abluft ermitteln, das für die Anpassung der Zuluft an die vorgegebene Feuchtefolge günstig ist, sondern auch jene Temperatur der Zuluft aus dem möglichen Arbeitstemperaturbereich ermitteln, bei der die Anpassung der Feuchtigkeit an die vorgegebene Feuchtesollwertfolge den geringsten Energieeinsatz erforderlich macht, wobei die aus dem zweiten Kühler rückgewinnbare Wärme in die Energiebilanzrechnung einbezogen wird. Wird beispielsweise festgestellt, daß die feuchte Abluft mit Außenluft so gemischt werden kann, daß diese den Sollwert der relativen Feuchte bei einem innerhalb des in Frage kommenden Bereiches liegenden Temperaturwert aufweist, so wird erfindungsgemäß keine Energie für Heizung oder Kühlung benötigt, d.h. gegenüber bekannten Verfahren Energie eingespart, die auch einen Temperatursollwert festlegen. Es wird aber auch weniger zusätzliche Energie benötigt, wenn der gewünschte Feuchtegrad durch die bloße Vermischung nicht erreichbar ist, da dann Heizung oder Kühlung nur solange in Betrieb genommen werden muß, bis die Zuluft den Feuchtesollwert enthält, wobei erfindungsgemäß ein Temperatursollwert nicht einbezogen wird. Die erfindungsgemäße Anlage benötigt daher keine Befeuchtungseinrichtung, da zu trockene Zuluft durch Kühlung im ersten oder im zweiten Kühler in jedem Fall soweit gekühlt werden kann, daß in einem Behandlungstemperaturwert die gewünschte relative Feuchte vorliegt.

Es hat sich nun weiters als vorteilhaft erwiesen, daß im Luftauslaßkanal in den Behandlungsraum ein zweiter Erhitzer eingesetzt ist. Dies vereinfacht die Steuerung während des gesamten Behandlungszeitraumes insoferne, als für die Zuluft eine Mindestbehandlungstemperatur festgelegt wird, die beispielsweise bei 12°C liegt, bei der die Zuluft die maximal notwendige Feuchte aufweist. Diese Zuluftfeuchte wird dabei in der oben beschriebenen Weise durch die beiden Kühler, die verstellbaren Absperrklappen und den ersten Erhitzer vorgegeben. Die Feuchteänderung erfolgt dann ausschließlich über den zweiten Erhitzer und ist somit ausschließlich temperaturgesteuert, wobei die bloße Temperaturmessung sehr exakt erfolgen kann. Da nach den Erfahrungswerten vom Beginn der Behandlung an die Feuchteabgabe des Behandlungsgutes, etwa bei Speck, rasch ansteigt, und ab dem zweiten bis dritten Behandlungstag allmählich absinkt, wird die Behandlungstemperatur von einem anfangs niederen Wert am zweiten bzw. dritten Tag ihren Höchstwert einnehmen und anschließend wieder absinken, um die Feuchteaufnahme der Luft der aufgrund der ungestörten kapillaren Wasserbewegung durch das Behandlungsgut entsprechenden Wasserfreisetzung anzupassen. Da die verhältnismäßig kühle, maximal feuchte Zuluft, wie die praktische Erprobung gezeigt hat, meist ohne Zusatzenergie bereitgestellt werden kann, ist die Erwärmung über einen nur kurzen Zeitraum erforderlich, wobei die für den zweiten Erhitzer benötigte Wärmeenergie, soweit möglich, aus der gegebenenfalls vorgenommenen Kühlung einer oder beider Kühler rückgewonnen wird.

Die Aufteilung der Zulufterwärmung mittels eines ersten und eines zweiten Erhitzers erbringt aber noch einen weiteren wesentlichen Vorteil: Bei Großanlagen ist es für eine kontinuierliche Erzeugung gereifter Produkte meist notwendig, dieses auf mehrere Behandlungsräume aufzuteilen, in denen unterschiedliche Reifestadien vorliegen, sodaß beispielsweise jeder dritte Tag eine Produktcharge zur Verfügung stellt. Nach dem eingangs genannten Stand der Technik müßte jedem Behandlungsraum eine eigene unabhängig zu steuernde Anlage zugeordnet werden. Die erfindungsgemäße Teilung in zwei voneinander distanzierte Erwärmungsbereiche erlaubt es nun, daß für die Behandlung auf mehrere Behandlungsräume verteilter Behandlungsgüter der Zuluftkanal nach dem ersten Ventilator in die entsprechende Anzahl von Zweigleitungen aufgeteilt ist, wobei jede Zweigleitung eine verstellbare Absperrung aufweist, und ein zweiter Erhitzer in jedem Lufteinlaßkanal vorgesehen ist. Besonders für diese Ausführung ist vorgesehen, daß der bzw. jeder Luftaustrittsöffnung in den Abluftkanal ein Temperaturmeßfühler zugeordnet ist, sodaß für jeden Behandlungsraum die Feuchtigkeitsabgabe des Behandlungsgutes aus dem Vergleich zwischen einem Sollwert und dem Istwert der ungekühlten Ablufttemperatur bestimmt wird, wobei die Temperaturdifferenz als weitere Regelgröße für die Zulufttemperatur verwendet wird. Dabei wird die Zulufttemperatur ausschließlich über jeden zweiten Erhitzer eingestellt, sodaß jeder Teilstrom individuell auf die für das Behandlungsgut erforderliche Feuchte gebracht werden kann.

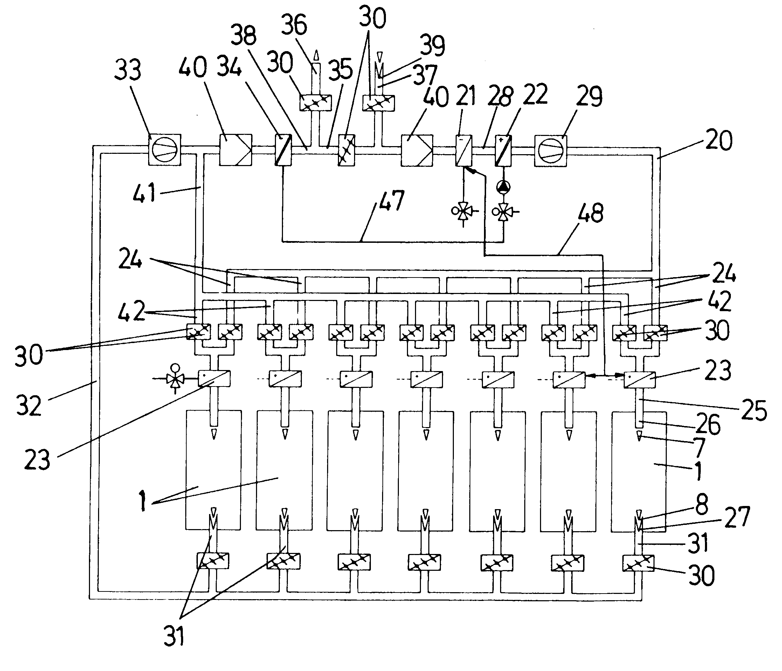

Nachstehend wird nun die Erfindung an Hand der beiliegenden Zeichnung näher beschrieben, ohne darauf beschränkt zu sein. Diese zeigt schematisch eine erfindungsgemäße Anlage mit sieben Behandlungsräumen.

Die Behandlungsräume 1 weisen jeweils einen Lufteinlaßkanal 25, dessen Lufteinlaß 7 ein Temperaturfühler 26 zugeordnet ist, und einen Luftauslaßkanal 31 auf, dessen Luftauslaß 8 ebenfalls ein Temperaturfühler 27 zugeordnet ist.

Die Luftauslaßkanäle 31, die mittels der verstellbaren Absperrklappen 30 einzeln regulierbar sind, münden in einen Abluftkanal 32, der einen zweiten Ventilator 33 enthält. Den Lufteinlaßkanälen 25 wird die Zuluft aus einem Zuluftkanal 20 zugeführt, von dem aus Zweigleitungen 24 ausgehen, die ebenfalls je eine Absperrklappe 30 enthalten und zu einem zweiten Erhitzer 23 führen, an den der Lufteinlaßkanal 25 anschließt. Im Anschluß an den zweiten Ventilator 33 zweigt vom Abluftkanal 32 ein Abluftzumischkanal 41 ab, der pro Behandlungsraum 1 eine Zweigleitung 42 besitzt, die mit einer Absperrklappe 30 versehen ist und zwischen der Absperrklappe 30 der Zuluftzweigleitung 24 und dem zweiten Erhitzer 23 in die Zuluftzweigleitung 24 mündet. Mit Hilfe des Abluftzumischkanales 41 kann feuchte Abluft direkt in die Behandlungsräume 1 geleitet werden, beispielsweise für eine gegebenenfalls gewünschte Erwärmung frisch eingebrachter Produkte ohne Entfeuchtung.

In den Abluftkanal 32 ist nach der Abzweigung des Abluftmischkanales 41 ein Luftfilter 40 und anschließend ein zweiter Kühler 34 eingesetzt. Im Anschluß daran befindet sich ein Temperatur- und Feuchtemesser 38 sowie eine Abzweigung eines Verbindungskanales 35. Die schließlich nach außen führende Abluftabführung 36 enthält eine weitere verstellbare Absperrklappe 30. Der Verbindungskanal 35, der ebenfalls mit einer verstellbaren Absperrklappe 30 versehen ist, mündet in den Zuluftkanal 20, der über eine ebenfalls sperrbare Außenluftzuführung 37 verfügt, an deren Eingang ein zweiter Temperatur- und Feuchtemesser 39 angeordnet ist. Nach der Mündung des Verbindungskanales 35 ist der Zuluftkanal 20 mit einem Filter 40, einem ersten Kühler 21, einem ersten Erhitzer 22 und einem ersten Ventilator 29 versehen. Zwischen dem ersten Kühler 21 und dem ersten Erhitzer 22 ist ein weiterer Temperaturmeßfühler 28 vorgesehen, der die Temperaturdifferenz zum Sollwert einer Mindestbehandlungstemperatur ermittelt.

Aus dem zweiten Kühler 34 rückgewonnene Wärme wird über die angedeutete Verbindung 47 zur Erwärmung der Zuluft im Erhitzer 22 mitverwendet. Eine Verbindung 48 dient der Übertragung von aus dem ersten Kühler 21 rückgewonnener Wärme an den bzw. die zweiten Erhitzer 23. Die gezeichnete Kreuzungsstelle zwischen den Verbindungen 47 und 48 kann auch verwirklicht sein, d.h. daß rückgewonnene Wärme aus dem ersten oder dem zweiten Kühler 21, 34 wahlweise dem ersten oder zweiten Erhitzer 22, 23 zugeführt werden kann. Die Absperrklappen 30 in der Abluftabführung 36, in der Außenluftzuführung 37 und in der Verbindungsleitung 35 dienen gemeinsam mit den beiden Ventilatoren 29, 33 der Verwirklichung der günstigsten allgemeinen Zuluftparameter, die durch die beiden Temperatur- und Feuchtemesser 38, 39 für die Abluft und die Außenluft ermittelt werden. Der Temperaturmeßfühler 27 im Luftauslaßkanal ermittelt aus der Veränderung der Ablufttemperatur die Feuchtigkeitsabgabe des Behandlungsgutes im Vergleich zu einem Sollwert und diese Veränderung wird als weitere Regelgröße für die individuelle Zulufttemperatur herangezogen. Eine Feuchtemessung im Behandlungsraum ist somit nicht notwendig, da die Feuchte über die Temperaturmessung wesentlich exakter festgestellt und durch die Temperaturänderung auch genauer geregelt werden kann.

Praktische Versuche haben nicht nur beträchtliche Energieeinsparungen, sondern auch eine Verkürzung der Gesamtreifezeit ergeben, in beiden Fällen betrugen die Werte etwa 25 %, und eine ausgezeichnete Qualität der Produkte konnte erreicht werden.

Erwähnt sei noch, daß die erfindungsgemäße Anlage auch zum Räuchern, vor allem zum Kalträuchern eingesetzt werden kann, wobei der Rauch entweder völlig getrennt in den Behandlungsraum ein- und ausgebracht aber auch in das Luftsystem eingespeist werden kann.

**Patentansprüche**

1. Anlage zur Trocknung bzw. Reifung von Nahrungsmitteln, insbesondere Fleischereierzeugnissen, mittels ungesättigter Luft, mit einem Behandlungsraum, der einen Zuluftkanal und einen Abluftkanal aufweist, wobei der Zuluftkanal an eine Außenluftzuführung anschließt, einen Kühler, einen Erhitzer und einen Ventilator aufweist, und über einen Lufteinlaßkanal (25) mit dem Behandlungsraum (1) verbunden ist, dadurch gekennzeichnet, daß vom Abluftkanal (32) ein Verbindungskanal (35) zum Zuluftkanal (20) führt, daß im Abluftkanal (32) vor der Abzweigung des Verbindungskanals (35) ein zweiter Ventilator (33) angeordnet ist, und daß die Abluftabführung (36), die Außenluftzuführung (37) und der Verbindungskanal (35) einzeln verstellbare Absperrklappen (30) enthalten.

2. Anlage nach Anspruch 1, dadurch gekennzeichnet, daß zwischen dem zweiten Ventilator (33) und der Abzweigung des Verbindungskanals (35) ein zweiter Kühler (34) vorgesehen ist.

3. Anlage nach Anspruch 2, dadurch gekennzeichnet, daß der zweite Kühler (34) wärmetäuschend mit dem Erhitzer (22) verbunden ist.

4. Anlage nach Anspruch 2 oder 3, dadurch gekennzeichnet, daß nach dem zweiten Kühler (34) und an der Außenluftzuführung (37) je ein Temperatur- und Feuchtemeßfühler (38,39) angeordnet ist.

5. Anlage nach einem der Ansprüche 1-4, dadurch gekennzeichnet, daß im Luftauslaßkanal (25) in den Behandlungsraum (1) ein zweiter Erhitzer (23) eingesetzt ist.

6. Anlage nach Anspruch 5, dadurch gekennzeichnet, daß für die Behandlung auf mehrere Behandlungsräume (1) verteilter Behandlungsgüter der Zuluftkanal (20) nach dem ersten Ventilator (29) in die entsprechende Anzahl von Zweigleitungen (24) aufgeteilt ist, wobei jede Zweigleitung (24) eine verstellbare Absperrung (30) aufweist, und ein zweiter Erhitzer (23) in jedem Lufteinlaßkanal (25) vorgesehen ist.

7. Anlage nach Anspruch 5 oder 6, dadurch gekennzeichnet, daß jeder zweite Erhitzer (23) wärmetauschend mit dem ersten und / oder dem zweiten Kühler (21,34) verbunden ist.

8. Anlage nach Anspruch 2 und 5, dadurch gekennzeichnet, daß zwischen dem zweiten Ventilator (33) und dem zweiten Kühler (34) ein Abluftmischkanal (41) abzweigt, der vor dem bzw. jedem zweiten Erhitzer (23) sperrbar in den Zuluftkanal (20) bzw. dessen Zweigleitung (24) mündet.

9. Anlage nach einem der Ansprüche 1 bis 8, dadurch gekennzeichnet, daß der bzw. jeder Luftaustrittsöffnung (8) in den Abluftkanal (32) ein Temperaturmeßfühler (27) zugeordnet ist.

10. Verfahren zur Trocknungs- bzw. Reifebehandlung von Nahrungsmitteln in einer Anlage nach den Ansprüchen 1 - 9, dadurch gekennzeichnet, daß die Temperatur und die relative Feuchte der gekühlten Abluft und der Außenluft verglichen werden, und aus den Vergleichswerten das Mischungsverhältnis ermittelt wird, das unter Berücksichtigung der der Abluft entzogenen Wärmemenge für die Kühlung bzw. Erwärmung der Zuluft einen minimalen Energieeinsatz erfordert, wobei die Veränderung der relativen Feuchte der Zuluft für die annähernde Anpassung an die Feuchtigkeitsabgabe des Behandlungsgutes ausschließlich durch Änderung der Zulufttemperatur erreicht wird.

11. Verfahren nach Anspruch 10, bei dem eine maximale relative Anfangsfeuchte während des Behandlungszeitraumes verringert wird, dadurch gekennzeichnet, daß die Zuluft mit einer Mindestbehandlungstemperatur und einer maximalen Anfangsfeuchte zugeführt wird, und daß während des Behandlungszeitraumes eine Nachfolgeerwärmung der Zuluft zur Anpassung an die gewünschte relative Feuchte erfolgt.

12. Verfahren nach Anspruch 10 oder 11, dadurch gekennzeichnet, daß die Feuchtigkeitsabgabe des Behandlungsgutes aus dem Vergleich zwischen einem Sollwert und dem Istwert der ungekühlten Ablufttemperatur bestimmt wird, wobei die Temperaturdifferenz als weitere Regelgröße für die Zulufttemperatur verwendet wird.

13. Verfahren nach Anspruch 11, dadurch gekennzeichnet, daß für Behandlungsgut mit unterschiedlichen Behandlungsparametern die die Mindestbehandlungstemperatur aufweisende Zuluft geteilt, und eine individuelle Nachfolgeerwärmung jedes Teilstromes der Zuluft zur Anpassung an die jedem Behandlungsgut zuzuordnende relative Feuchte erfolgt, wobei für die Nachfolgeerwärmung zumindest teilweise rückgewonnene Wärme aus der Kühlung verwendet wird.

## Claims

1. Installation for the drying or maturing of foodstuffs, in particular butcher's products, by means of unsaturated air, comprising a treatment chamber which has a feed air duct and an exhaust air duct, wherein the feed air duct connects to an external air supply, has a cooler, a heater and a fan and is connected to the treatment chamber (1) by way of an air inlet duct (25), characterised in that a connecting duct (35) leads from the exhaust air duct (32) to the feed air duct (20), that a second fan (33) is arranged in the exhaust air duct (32) upstream of the location at which the connecting duct (35) branches off, and that the exhaust air discharge (36), the external air supply (37) and the connecting duct (35) include individually adjustable shut-off valves (30).

2. An installation according to claim 1 characterised in that a second cooler (34) is provided between the second fan (33) and the location at which the connecting duct (35) branches off.

3. An installation according to claim 2 characterised in that the second cooler (34) is in heat-exchange relationship with the heater (22).

4. An installation according to claim 2 or claim 3 characterised in that a respective temperature and moisture measuring sensor (38, 39) is arranged downstream of the second cooler (34) and at the external air supply (37) respectively.

5. An installation according to one of claims 1 to 4 characterised in that a second heater (23) is fitted in the air inlet duct (25) into the treatment chamber (1).

6. An installation according to claim 5 characterised in that for the treatment of materials requiring treatment which are distributed to a plurality of treatment chambers (1) the feed air duct (20), downstream of the first fan (29), is divided into the appropriate number of branch conduits (24), wherein each branch conduit (24) has an adjustable shut-off means (30), and a second heater (23) is provided in each air inlet duct (25).

7. An installation according to claim 5 or claim 6 characterised in that each second heater (23) is in heat-exchange relationship with the first and/or the second cooler (21, 34).

8. An installation according to claim 2 and claim 5 characterised in that an exhaust air mixing duct (41) branches off between the second fan (33) and the second cooler (34) and opens closably upstream of the or each second heater (23) into the feed air duct (20) or the branch conduit (24) thereof.

9. An installation according to one of claims 1 to 8 characterised in that a temperature measuring sensor (27) is associated with the or each air outlet opening (8) into the exhaust air duct (32).

10. A method of drying or maturing treatment of foodstuffs in an installation according to claims 1 to 9 characterised in that the temperature and the relative humidity of the cooled exhaust air and the external air are compared and from the comparative values there is ascertained the mixing ratio which requires minimum energy usage for cooling or heating the feed air in consideration of the amount of heat taken from the exhaust air, wherein the variation in the relative humidity of the feed air for approximate adaptation to the discharge of moisture from the material being treated is achieved exclusively by altering the feed air temperature.

11. A method according to claim 10 in which a maximum relative initial humidity is reduced during the treatment period characterised in that the feed air is supplied at a minimum treatment temperature and a maximum initial humidity and that during the treatment period adjustment heating of the feed air is effected for the purposes of adaptation to the desired relative humidity.

12. A method according to claim 10 or claim 11 characterised in that the discharge of moisture from the material being treated is determined from the comparison between a reference value and the actual value in respect of the uncooled exhaust air temperature, the temperature difference being used as a further regulating parameter for the feed air temperature.

13. A method according to claim 11 characterised in that for material to be treated with different treatment parameters, the feed air at the minimum treatment temperature is divided and individual adjustment heating of each partial flow of the feed air is effected for adaptation to the relative humidity to be associated with each item to be treated, wherein at least partially recovered heat from the cooling step is used for the adjustment heating operation.

**Revendications**

1. Installation pour le séchage ou la maturation d'aliments, en particulier de produits de boucherie, à l'aide d'air non saturé, comportant une chambre de traitement pourvue d'un canal d'amenée d'air et d'un canal d'évacuation d'air, étant precisé que le canal d'amenée d'air fait suite à un dispositif d'alimentation en air extérieur et possède un dispositif de refroidissement, un dispositif de chauffage et un ventilateur, et est relié par l'intermédiaire d'un canal d'admission d'air (25) à la chambre de traitement (1), caractérisée en ce qu'un canal de liaison (35) mène du canal d'évacuation d'air (32) au canal d'amenée d'air (20), en ce qu'il est prévu un second ventilateur (33) qui est disposé en amont de l'embranchement du canal de liaison (35), dans le canal d'évacuation d'air (32), et en ce que le dispositif d'évacuation d'air sortant (36), le dispositif d'alimentation en air extérieur (37) et le canal de liaison (35) contiennent des clapets d'arrêt (30) réglables individuellement.

2. Installation selon la revendication 1, caractérisée en ce qu'il est prévu, entre le second ventilateur (33) et l'émbranchement du canal de liaison (35), un second dispositif de refroidissement (34).

3. Installation selon la revendication 2, caractérisée en ce que le second dispositif de refroidissement (34) est relié au dispositif de chauffage (22) suivant une relation d'échange de chaleur.

4. Installation selon la revendication 2 ou 3, caractérisée en ce qu'il est prévu des capteurs de température et d'humidité (38, 39) disposés respectivement en aval du second dispositif de refroidissement (34) et au niveau du dispositif d'alimentation en air extérieur (37).

5. Installation selon l'une des revendications 1 à 4, caractérisée en ce qu'un second dispositif de chauffage (23) est placé dans le canal d'évacuation d'air (25) menant dans la chambre de traitement (1).

6. Installation selon la revendication 5, caractérisée en ce que, pour le traitement de produits à traiter répartis dans plusieurs chambres de traitement (1), le canal d'amenée d'air (20) est divisé, en aval du premier ventilateur (29), en conduites dérivées (24) du nombre correspondant, chaque conduite dérivée (24) possédant un dispositif d'arrêt réglable (30), et un second dispositif de chauffage (23) est prévu dans chaque canal d'admission d'air (25).

7. Installation selon la revendication 5 ou 6, caractérisée en ce que chaque second dispositif de chauffage (23) est relié au premier et/ou au second dispositif de refroidissement (21, 34) suivant une relation d'échange de chaleur.

8. Installation selon les revendications 2 et 5, caractérisée en ce qu'il est prévu, entre le second ventilateur (33) et le second dispositif de refroidissement (34), un canal mélangeur d'air d'évacuation (41) qui bifurque et débouche, apte a être bloqué en amont du ou de chaque second dispositif de chauffage (23), dans le canal d'amenée d'air (20) ou dans une conduite dérivée (24) de celui-ci.

9. Installation selon l'une des revendications 1 à 8, caractérisée en ce qu'il est prévu, associé à l'orifice ou à chaque orifice d'évacuation d'air (8) menant dans le canal d'évacuation d'air (32), un capteur de température (27).

10. Procédé pour le traitement par séchage ou maturation d'aliments dans une installation selon les revendications 1 à 9, caractérisé en ce que la température et l'humidité relative de l'air d'évacuation refroidi et de l'air extérieur sont conparées, et à partir des valeurs de comparaison est calculé le rapport de mélange qui nécessite une mise en oeuvre d'énergie minimale pour le refroidissement et le réchauffement de l'air amené, compte tenu de la quantité de chaleur extraite de l'air d'évacuation, la variation de l'humidité relative de l'air amené, pour l'adaptation approximative au dégagement d'humidité des produits à traiter, étant obtenue exclusivement grâce à une variation de la température de l'air amené.

11. Procédé selon la revendication 10, pour lequel une humidité initiale relative maximale est réduite pendant la période du traitement, caractérisé en ce que l'air amené est alimenté à une température de traitement minimale et à une humidité initiale maximale, et en ce qu'un réchauffement consécutif de l'air amené se fait pendant la période du traitement en vue de l'adaptation à l'humidité relative souhaitée.

12. Procédé selon la revendication 10 ou 11, caractérisé en ce que le dégagement d'humidité des produits à traiter est défini à partir de la comparaison entre une valeur théorique et la valeur réelle de la température d'air évacué non refroidi, la différence de température étant utilisée comme seconde grandeur de réglage pour la température de l'air amené.

13. Procédé selon la revendication 11, caractérisé en ce que, pour des produits à traiter présentant des paramètres de traitement différents, l'air amené présentant la température de traitement minimale est divisé, et un réchauffement consécutif individuel de chaque courant partiel de l'air amené se fait en vue de l'adaptation à l'humidité relative devant être associée à chaque produit à traiter, le réchauffement consécutif utilisant au moins en partie la chaleur récupérée à partir du refroidissement.